# EUROPEAN PATENT SPECIFICATION

(11) **EP 2 511 144 B1**
(45) Date of publication and mention of the grant of the patent: **10.04.2019**
(21) Application number: 12164132.8
(22) Date of filing: 13.04.2012
(51) Int. Cl.: B60S 1/52

(54) **Vehicle lamp washer system and nozzle cover**
Fahrzeuglampen-Waschsystem und Düsenabdeckung
Système de lavage de lampe de véhicule et couvercle de buse

(30) Priority: 14.04.2011 JP 2011089959; 14.04.2011 JP 2011089960; 14.04.2011 JP 2011089961
(43) Date of publication of application: 17.10.2012
(73) Proprietor: Koito Manufacturing Co., Ltd., Tokyo 108-8711 (JP)
(72) Inventor: Ichikawa, Yasuhiro, SHIZUOKA-SHI, SHIZUOKA (JP); Sakai, Masaru, SHIZUOKA-SHI, SHIZUOKA (JP)
(74) Representative: Intès, Didier Gérard André

(56) References cited:
- WO-A1-2010/028661
- WO-A2-2007/091249
- JP-A- H10 119 731
- JP-A- 2010 221 782
- JP-U- S63 114 868
- US-A1- 2006 114 666

## Description

### BACKGROUND

### TECHNICAL FIELD

The present disclosure relates to a vehicle lamp washer system and a nozzle cover. More particularly, the present disclosure relates to a technical field in which a smooth flow of washer fluid is ensured by disposing a valve which supplies or stops the supply of a washer fluid in a branch portion in a flow path. Additionally, the present disclosure relates to a technical field in which a reduction in production cost is realized through a reduction in the number of parts involved by forming a cylinder into a shape which is opened in a direction in which a piston is caused to protrude. Further, the present disclosure relates to a technical field in which a reduction in size of a washer system by connecting a nozzle cover adapted to open and close an opening formed in a vehicle body or a bumper to a valve case having a jet nozzle.

### RELATED ART

There is a washer system for washing a surface of a cover of a vehicle lamp with a washer fluid which is jetted from a jet nozzle or jet nozzles by causing part of the washer system to project outwards from an opening formed in a vehicle body or a bumper.

The washer system has a valve case provided at a front end side and having the jet nozzle for jetting the washer fluid, a piston connected to the valve case, and a cylinder which holds the piston movably. The washer system is mounted in the vehicle body or the bumper via a bracket.

In the washer system configured as has been described above, the valve case and part of the piston are caused to project forwards from the opening formed in the vehicle body or the bumper, and the washer fluid is jetted from the jet nozzles for washing. Then, the valve case and the piston are withdrawn from the opening into an interior of the vehicle body or the bumper for accommodation (for example, refer to Patent Literature 1).

In a washer system described in Patent Literature 1, a valve is provided which is moved in a flowing direction of a washer fluid to thereby be opened and closed. Then, the valve is opened as a fluid pressure in an interior of a piston increases as a result of the washer fluid being supplied into the piston, whereby the washer fluid is supplied into an interior of a valve case and is then jetted from jet nozzles. WO 2010/028661 A1 discloses a vehicle lamp washer system according to the preamble of claim 1.

### [Patent Literature 1] JP-A-2010-221782

In the washer system described in Patent Literature 1, however, when the valve is opened, the washer fluid is once divided to flow past the periphery of the valve, and the flows of divided washer fluid are then merged together to flow towards the jet nozzles.

Consequently, the fluid pressure of the washer fluid tends to change easily, and the opening and closing of the valve becomes unstable, leading to fears that the valve is operated to be opened and closed alternately in a repeated fashion. This results in a possibility that the washer fluid does not flow smoothly, which makes unstable the jetting of washer fluid from the jet nozzles.

In addition, the washer system described in Patent Literature 1 has a cylinder which is opened to the rear, a piston which is supported movably in the cylinder with part thereof projecting to the front from the cylinder and a cap (a joint) which closes the opening at the rear end of the cylinder.

In the washer system described in Patent Literature 1, an O-ring is disposed between the cylinder and the cap so as to ensure closeness therebetween, and an annular seal member which is formed of a rubber material is mounted at a rear end portion of the piston. Consequently, when the washer fluid is supplied from a supply tank into the cylinder via the cap, the leakage of washer fluid from the cylinder is prevented by the O-ring, and the washer fluid is prevented by the seal member from flowing further forwards than the seal member in the cylinder.

In the washer system described in Patent Literature 1, however, the cap is mounted at a rear end portion of the cylinder, and the washer fluid is supplied into the cylinder via the cap. Therefore, the O-ring needs to be disposed between the cylinder and the cap so as to ensure the closeness therebetween. This leads to a problem that the number of parts is increased accordingly to thereby increase the production cost.

Further, in the washer system described in Patent Literature 1, the valve case having the jet nozzles is connected to a front end portion of the piston, and a holder is mounted at a front end portion of the valve case. A nozzle cover is connected to the holder, and the valve case, the holder and the nozzle cover are moved altogether as the piston moves. An opening formed in a vehicle body or a bumper is closed by the nozzle cover in such a state that the piston is situated at the rear. As the piston moves to the front, the opening is opened, and the valve case is caused to project from the opening to the front, and the washer fluid is jetted from the jet nozzles so as to wash a surface of a cover of a vehicle lamp.

In the washer system described in Patent Literature 1, however, the holder is mounted on the valve case, and the nozzle cover is connected to the holder. Therefore, the overall length of the washer system is increased accordingly, which interrupts an attempt to reduce the size of the washer system. In addition, this causes a problem that the number of parts is increased, which increases the production cost.

### SUMMARY

One or more exemplary embodiments of the present invention provide a vehicle lamp washer system which can realize a stable jetting operation of a washer fluid from jet nozzles by ensuring a smooth flow of washer fluid.

Additionally, one or more exemplary embodiments of the present invention provide a vehicle lamp washer system which can realize a reduction in production cost by reducing the number of parts involved.

Further, one or more exemplary embodiments of the present invention provide a vehicle lamp washer system and a nozzle cover which can realize a reduction in production cost by reducing an overall length of the system and the number of parts involved therein.

A vehicle lamp washer system according to the invention is defined in claim 1 and comprises:
a cylinder into which a washer fluid is supplied from a supply tank;
a piston supported in the cylinder so as to move in an axial direction with a part of the piston projecting from the cylinder, the piston having a first flow path through which the washer fluid flows;
a valve case having a plurality of jet nozzles from which the washer fluid is jetted and being connected to one end portion in the axial direction of the part of the piston projecting from the cylinder, the valve case having a second flow path connected to the first flow path, a plurality of third flow paths branching off the second flow path and communicating with the plurality of jet nozzles, respectively, and a branch portion at which the second flow path and the plurality of third flow paths are connected together; and
a valve disposed in the branch portion and adapted to move in accordance with a fluid pressure of the washer fluid to open or close the branch portion so as to start or stop a supply of the washer fluid from the second flow path to the plurality of third flow paths.

Consequently, in the vehicle lamp washer system, when the valve is opened as a result of the washer fluid being supplied, the washer fluid is divided from the second flow path into the third flow paths so as to be jetted from the respective jet nozzles.

A vehicle lamp washer system according to another aspect of the present disclosure comprises:
a cylinder having a connecting portion at one end portion in an axial direction and an opening portion at the other end portion in the axial direction, the connecting portion adapted to be connected to a connecting tube through which a washer fluid is sent from a supply tank;
a piston supported in the cylinder so as to move in the axial direction with a part of the piston projecting from the opening portion;
a valve case having a jet nozzle from which the washer fluid is jetted and connected to one end portion in the axial direction of the piston; and
a cap mounted at the other end portion of the cylinder to close a gap defined between the cylinder and the piston in the opening portion.

Consequently, in the vehicle lamp washer system, the washer fluid is supplied into the cylinder via the connecting portion provided on the cylinder.

A vehicle lamp washer system according to yet another aspect of the present disclosure comprises:
a cylinder into which a washer fluid is supplied from a supply tank;
a piston supported in the cylinder so as to move in an axial direction with a part the piston projecting from the cylinder;
a valve case having a jet nozzle from which the washer fluid is jetted and connected to one end portion in the axial direction of the part of the piston projecting from the cylinder to move together with the piston; and
a nozzle cover connected to the valve case and adapted to open and close an opening formed in a vehicle body or a bumper in accordance with the movement of the piston.

Consequently, in the vehicle lamp washer system, nothing is interposed between the valve case and the nozzle cover.

A nozzle cover according to yet another aspect of the present disclosure comprises:
a cover portion adapted to close an opening formed in a vehicle body or a bumper; and
a connecting portion provided on an inner surface side of the cover portion and adapted to be connected to a valve case which has a jet nozzle and is connected to a piston, wherein
the nozzle cover is adapted to move in conjunction with the movement of the piston which is caused to move relative to a cylinder in accordance with a supply amount of a washer fluid.

Consequently, in the nozzle cover, the nozzle cover is connected to the valve case with nothing interposed between the valve case and itself.

### [Advantages of the Invention]

The vehicle lamp washer system according to the invention comprises:
a cylinder into which a washer fluid is supplied from a supply tank;
a piston supported in the cylinder so as to move in an axial direction with a part of the piston projecting from the cylinder, the piston having a first flow path through which the washer fluid flows;
a valve case having a plurality of jet nozzles from which the washer fluid is jetted and being connected to one end portion in the axial direction of the part of the piston projecting from the cylinder, the valve case having a second flow path connected to the first flow path, a plurality of third flow paths branching off the second flow path and communicating with the plurality of jet nozzles, respectively, and a branch portion at which the second flow path and the plurality of third flow paths are connected together; and
a valve disposed in the branch portion and adapted to move in accordance with a fluid pressure of the washer fluid to open or close the branch portion so as to start or stop a supply of the washer fluid from the second flow path to the plurality of third flow paths.

Consequently, the washer fluid is divided into the third flow paths at the same time as the valve is opened, and therefore, the fluid pressure of the washer fluid is made difficult to change in the valve case. Thus, the valve is allowed to be opened and closed in a stable fashion, thereby making it possible to ensure a smooth flow of the washer fluid. Additionally, the washer fluid can be jetted stably from the jet nozzles.

The above vehicle lamp washer system may further comprise:
a restricting portion disposed in the valve case against which the valve is pressed to thereby restrict the movement of the valve; and
a biasing spring disposed in the valve case and adapted to bias the valve in a direction in which the valve is pressed against the restricting portion, wherein
the valve is adapted to move in a direction in which the washer fluid flows in the second flow path so as to open or close the branch portion.

Consequently, the opening and closing mechanism of the valve can be simplified, thereby making it possible to realize a simplification in construction and a reduction in size of the washer system.

In the above vehicle lamp washer system, jet ports of the jet nozzles may function as release holes from which air present in the third flow paths is released to the atmosphere.

Consequently, no separate exclusive release hole which communicates with the atmosphere needs to be formed, thereby making it possible to realize the simplified construction.

The above vehicle lamp washer system may further comprise:
a tensile coil spring adapted to bias the piston in a direction in which the piston is accommodated in the cylinder, the tensile coil spring having an annular engagement portion at one end portion, the engagement portion larger in diameter than the other portion, wherein
the piston has a support and engagement portion at one end portion in the axial direction, and wherein
the annular engagement portion is fitted and supported on the support and engagement portion while the other portion than the annular engagement portion of the tensile coil spring is inserted in the piston, and the other end portion of the tensile coil spring is supported in the cylinder.

Consequently, an improvement in workability can be realized in assembling the tensile spring to the piston.

In the vehicle lamp washer system and according to the invention, the piston has a piston-side fitting portion at the one end portion in the axial direction, the piston-side fitting portion having an indented shape in which projecting portions and recess portions are aligned alternately in a circumferential direction,
the valve case has a case-side fitting portion for fitment with the piston-side fitting portion, the case-side fitting portion having an indented shape in which projecting portions and recess portions are aligned alternately in a circumferential direction, and
the projecting portions and the recess portions of the case-side fitting portion are fitted in and on the recess portions and the projecting portions of the piston-side fitting portion so that the piston and the valve case are connected together.

Consequently, the valve case can be connected to the piston without setting the piston in any specific orientation, thereby making it possible to realize an improvement in workability in connecting the valve case to the piston.

The vehicle lamp washer system according to another aspect of the present disclosure comprises:
a cylinder having a connecting portion at one end portion in an axial direction and an opening portion at the other end portion in the axial direction, the connecting portion adapted to be connected to a connecting tube through which a washer fluid is sent from a supply tank;
a piston supported in the cylinder so as to move in the axial direction with a part of the piston projecting from the opening portion;
a valve case having a jet nozzle from which the washer fluid is jetted and connected to one end portion in the axial direction of the piston; and
a cap mounted at the other end portion of the cylinder to close a gap defined between the cylinder and the piston in the opening portion.

Consequently, since the connecting portion is provided on the cylinder, no O-ring needs to be disposed which prevents the leakage of washer fluid from the cylinder. Thus, the number of parts involved can be reduced accordingly, thereby making it possible to realize a reduction in production cost.

The above vehicle lamp washer system, further comprises:
a dust cover mounted on the cap or the other end portion of the cylinder and adapted to cover the cap from the outside with an inner circumferential portion of the dust cover brought into contact with an outer circumferential surface of the piston.

Consequently, the intrusion of dust or water into the cylinder can be prevented by the dust cover.

The above vehicle lamp washer system, further comprises:
a bracket to be mounted on a vehicle body or a bumper, having a pushing portion, wherein
the cylinder is hold by the bracket, and wherein
the dust cover is pushed from the outside by the pushing portion.

Consequently, the dust cover is prevented from being dislocated from the cap and the cylinder, thereby making it possible to prevent the intrusion of dust or water into the cylinder.

The vehicle lamp washer system according to yet another aspect of the present disclosure comprises:
a cylinder into which a washer fluid is supplied from a supply tank;
a piston supported in the cylinder so as to move in an axial direction with a part the piston projecting from the cylinder;
a valve case having a jet nozzle from which the washer fluid is jetted and connected to one end portion in the axial direction of the part of the piston projecting from the cylinder to move together with the piston; and
a nozzle cover connected to the valve case and adapted to open and close an opening formed in a vehicle body or a bumper in accordance with the movement of the piston.

Consequently, since nothing is interposed between the nozzle cover and the valve cover, the overall length of the washer system can be reduced, thereby making it possible to reduce the size of the washer system. Additionally, the number of parts involved can be reduced, thereby making it possible to realize a reduction in production cost.

The above vehicle lamp washer system, further comprises:
an elastically deformable engagement piece with an engagement hole provided on either the valve case and the nozzle cover; and
an engagement projecting portion formed on the other of the valve case and the nozzle cover and brought into engagement with the engagement hole of the engagement piece, wherein
the engagement projecting portion slides under the engagement piece so as to elastically deform the engagement piece as the nozzle cover is caused to move in a direction in which the nozzle cover approaches the valve case relatively, and the engagement piece is elastically restored when the engagement projecting portion is brought into engagement with the engagement hole of the engagement piece as a result of sliding under the engagement piece, whereby the nozzle cover is connected to the valve case.

Consequently, the nozzle cover can be mounted on and dismounted from the valve case by elastically deforming the engagement piece, whereby the mounting and dismounting work of the nozzle cover on and from the valve case can be facilitate, thereby making it possible to realize an improvement in workability.

In the above vehicle lamp washer system,
the valve case has a guide portion, and the nozzle cover has a guided portion, and
the guided portion is guided by the guide portion when the nozzle cover is caused to move in the direction in which the nozzle cover approaches the valve case relatively.

Consequently, the nozzle cover can be connected to the predetermined position relative to the valve case in an ensured fashion.

In the above vehicle lamp washer system,
the valve case has a rotation restricting portion adapted to restrict the rotation of the nozzle cover relative to the valve case.

Consequently, the rotation of the nozzle cover relative to the valve case can be restricted, thereby making it possible to hold the nozzle cover in the predetermined position relative to the valve case.

The nozzle cover according to yet another aspect of the present disclosure comprises:
a cover portion adapted to close an opening formed in a vehicle body or a bumper; and
a connecting portion provided on an inner surface side of the cover portion and adapted to be connected to a valve case which has a jet nozzle and is connected to a piston, wherein
the nozzle cover is adapted to move in conjunction with the movement of the piston which is caused to move relative to a cylinder in accordance with a supply amount of a washer fluid.

Consequently, since nothing is interposed between the valve cover and itself, the overall length of the washer system can be reduced, thereby making it possible to reduce the size of the washer system. Additionally, the number of parts involved can be reduced, thereby making it possible to realize a reduction in production cost.

### BRIEF DESCRIPTION OF THE DRAWINGS

Fig. 1 is a perspective view showing a washer system together with a bracket according to an embodiment of the invention.
Fig. 2 is a sectional view showing the washer system.
Fig. 3 is a side view showing the washer system with a part thereof shown in section.
Fig. 4 is an enlarged perspective view showing a state that the tensile coil spring is inserted in to the piston.
Fig. 5 is a perspective view showing a valve case is separated from the piston.
Fig. 6 is an enlarged plan view showing a valve closed with a part thereof shown in section.
Fig. 7 is a perspective view showing a state that a nozzle cover is separated from the valve case.
Fig. 8 is an enlarged rear view of the nozzle cover.
Fig. 9 is a side view showing a state before the washer fluid is jetted with a part thereof shown in section.
Fig. 10 is a side view showing a state that the washer fluid is jetted with a part thereof shown in section.
Fig. 11 is an enlarged plan view showing a state that the washer fluid is supplied and then the valve is opened with a part thereof shown in section.

### DETAILED DESCRIPTION

Exemplary embodiments of a vehicle lamp washer system will be described by reference to the accompanying drawings.

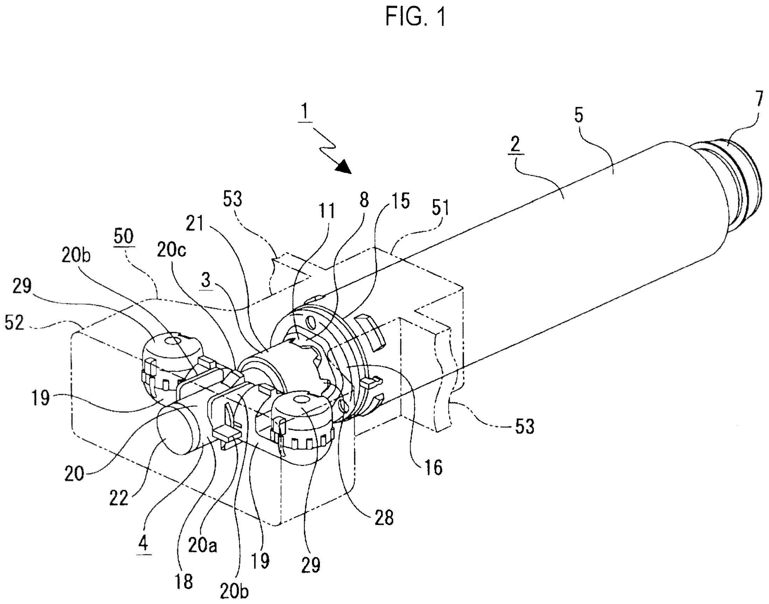

A washer system 1 includes a cylinder 2, a piston 3 which is supported in the cylinder 2 so as to move in an axial direction (a front-to-rear or longitudinal direction), and a valve case 4 which is connected to a front end portion of the piston 3 (refer to Figs. 1 to 3).

The cylinder 2 has a cylindrical portion 5, a rear surface portion 6 and a connecting portion 7. The cylindrical portion 5 has a cylindrical shape and extends in the longitudinal direction. The rear surface portion 6 projects inwards from an end portion of the cylindrical portion 5. The connecting portion 7 projects rearwards from an inner circumferential portion of the rear surface portion 6.

A front end of the cylindrical portion 5 is opened to the front, whereby an opening portion 5a is formed.

A center hole in the rear surface portion 6 is formed as an inlet hole 6a, and a spring hook engagement projecting portion 6b is provided on the rear surface portion 6 so as to project from an inner circumferential surface thereof.

The connecting portion 7 is formed into a substantially cylindrical shape. A connecting tube 100 is connected to the connecting portion 7, and the connecting tube 100 is connected to a supply tank, not shown, where a washer fluid, which will be described later, is reserved.

The piston 3 has a cylindrical portion 8, a support and engagement portion 9 which projects forwards from a front end portion of the cylindrical portion 8, and a flange portion 10 which expands radially outwards from a position lying near a rear end of the cylindrical portion 8.

The cylindrical portion 8 has, for example, a regular hexagonal cross section. The front end portion of the cylindrical portion 8 is provided as a piston-side fitting portion 11. The piston-side fitting portion 11 has an irregular or indented shape in which projecting portions 11a, 11a, ... and recess portions 11b, 11b, ... are aligned alternately in a circumferential direction. The piston-side fitting portion 11 is formed so that the projecting portions 11a, 11a, ... are disposed one for each of sides of a regular hexagon in an alternating fashion.

The support and engagement portion 9 has an external shape which is smaller than an external shape of the cylindrical portion 8 and is made up of a connecting cylindrical portion 12 which is continuous with the cylindrical portion 8 and a spring support portion 13 which projects forwards from the connecting cylindrical portion 12.

The connecting cylindrical portion 12 has an outside diameter which is larger one size than an outside diameter of the spring support portion 13. An outer circumferential portion of a front side is formed as a spring bearing portion 12a. A flange-shaped fitting projecting portion 12b is provided in a position lying near a front end of the connecting cylindrical portion 12 so as to expand radially outwards.

The spring support portion 13 has a semi-arc shape.

A seal member 14 is attached to a rear side of the flange portion 10. The seal member 14 is formed of an elastically deformable material such as rubber and has an outside diameter which is slightly larger than an inside diameter of the cylindrical portion 5 of the cylinder 2.

An interior space of the piston 3 is formed as a first flow path 3a in which a washer fluid flows.

A portion of the piston 3 which excludes a portion at a front end side is inserted into an interior of the cylinder 2 from the front so as to be supported in the cylinder 2 so as to move freely in a front-to-rear or longitudinal direction. In such a state that the piston 3 is inserted to be supported in the cylinder 2, an outer circumferential portion of the seal member 14 is closely secured to an inner circumferential surface of the cylinder 2, so as to prevent a washer fluid from flowing further forwards than the seal member 14 when the washer fluid is supplied into the cylinder 2.

In such a state that the piston 3 is supported in the cylinder 2, a cap 15 is mounted in a front end portion of the cylinder 2. The cap 15 has a substantially annular shape and is mounted in the front end portion of the cylinder 2 in such a state that the cap 15 is fitted on the cylindrical portion 8 of the piston 3. A gap between the cylinder 2 and the piston 3 in the opening portion 5a of the cylinder 2 is closed by the cap 15.

A dust cover 16 is attached to a front side of the cap 15. The dust cover 16 is formed into a substantially annular shape of an elastically deformable material such as rubber. An inner circumferential surface of the dust cover 16 is closely secured to an outer circumferential surface of the cylindrical portion 8 of the piston 3. Consequently, the dust cover 16 prevents dust or water from intruding into the cylinder 2.

The seal member 14 slides on an inner circumferential surface of the cylinder 2, and the outer circumferential surface of the cylindrical portion 8 of the piston 3 slides on the inner circumferential surface of the dust cover 16, when the piston 3 moves in the longitudinal direction relative to the cylinder 2.

In such a state that the piston 3 is supported in the cylinder 2, a tensile coil spring 17 is supported between the cylinder 2 and the piston 3. A portion of the tensile coil spring 17 which excludes front and rear end portions is formed as an intermediate portion 17a where the spring is coiled in a constant diameter. The front end portion of the tensile coil spring 17 is formed as an annular engagement portion 17b where the spring is coiled in a diameter larger than that of the intermediate portion 17a. The rear end portion of the tensile coil spring 17 is hooked so as to be formed as a hook portion 17c.

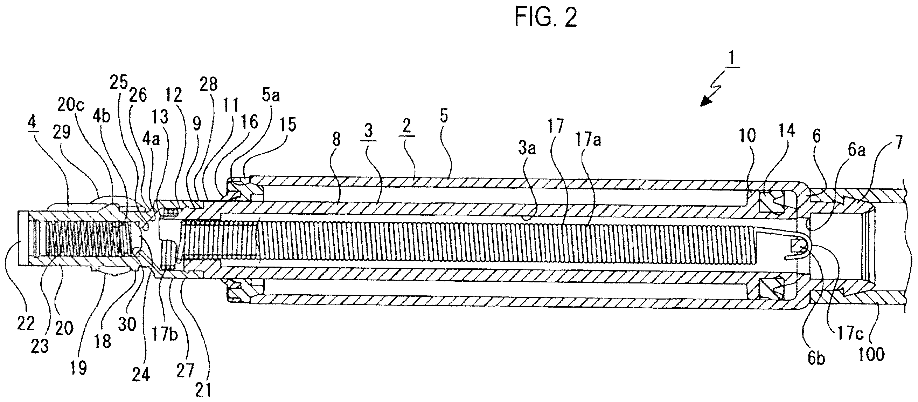

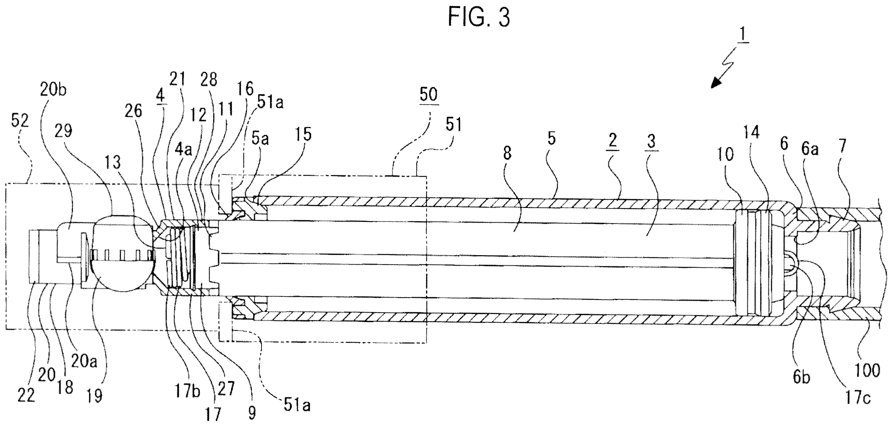

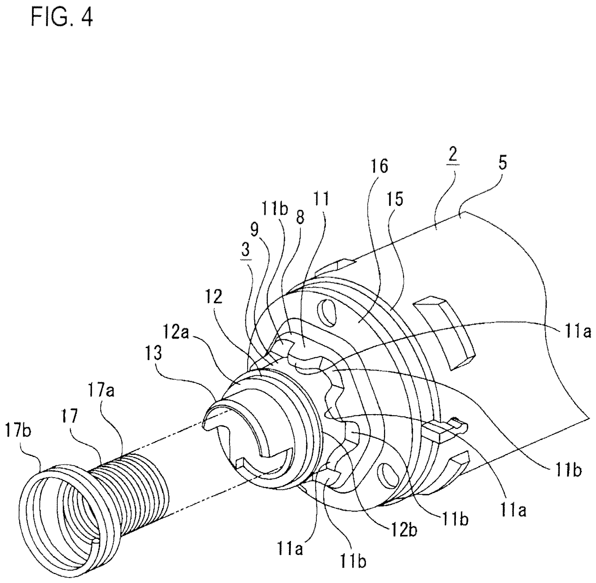

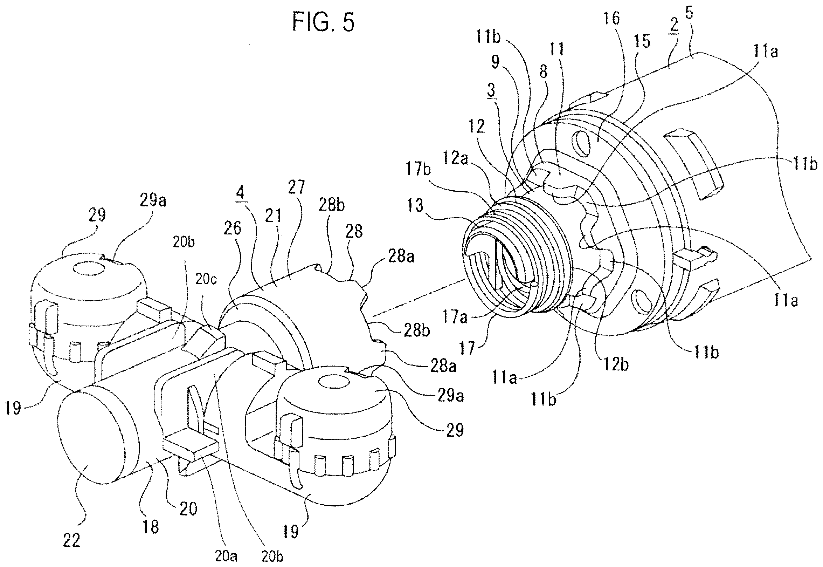

The portion of the tensile coil spring 17 excluding the annular engagement portion 17b is inserted into the piston 3 from the front (refer to Fig. 4). When the tensile coil spring 17 is inserted into the piston 3 from the front, the annular engagement portion 17b is fitted on the spring support portion 13 of the piston 3 so as to be supported thereon, and a rear surface of the annular engagement portion 17b is pressed against the spring bearing surface 12a of the connecting cylindrical portion 12 (refer to Fig. 5). The hook portion 17c of the tensile coil spring 17 projects rearwards from the piston 3 and is brought into engagement with the spring hook engagement portion 6b of the cylinder 2 (refer to Figs. 2 and 3).

Consequently, the piston 3 is biased to the rear relative to the cylinder 2 by the tensile coil spring 17, whereby a rear end face of the piston 3 is pressed against a front surface of the rear surface portion 6 of the cylinder 2. A position where the rear end face of the piston 3 is pressed against the front face of the rear face portion 6 is referred to as an accommodation position of the piston 3.

In the washer system 1 that is configured as has been described heretofore, one end portion (the annular engagement portion 17b) of the tensile coil spring 17 is supported on the piston 3 by inserting the tensile coil spring 17 into the piston 3. Therefore, an increase in workability can be realized in assembling the tensile coil spring 17 to the piston 3.

In addition, the one end portion of the tensile coil spring 17 is formed as the annular engagement portion 17b where the spring is coiled. Therefore, a total axial length of the tensile coil spring 17 and the piston 3 is reduced, whereby an overall length of the piston can be reduced, thereby making it possible to realize a reduction in size of the washer system 1.

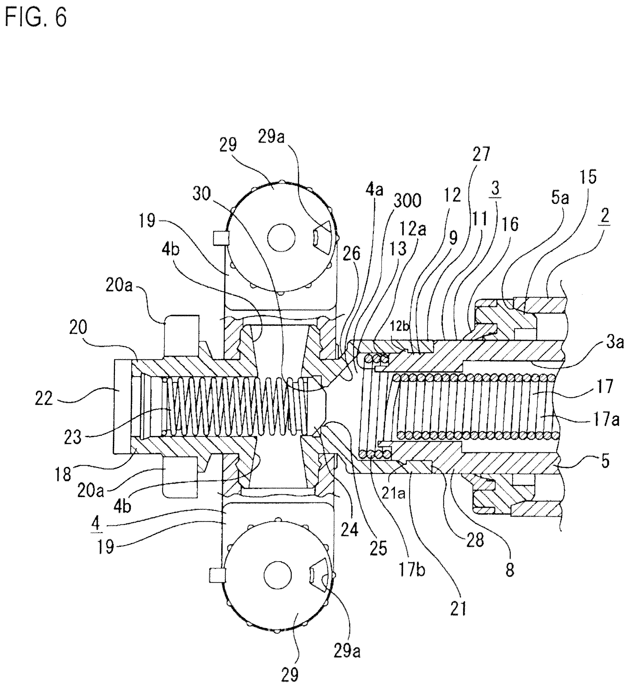

The valve case 4 has a base portion 18 and a pair of nozzle holding portions 19, 19 (Figs. 5 and 6).

The base portion 18 has a substantially cylindrical connecting and holding portion 20 which extends in the longitudinal direction and a cylindrical connecting projecting portion 21 which is continuous with a rear end of the connecting and holding portion 20.

The connecting and holding portion 20 is closed by a lid member 22 attached to a front end portion thereof. A biasing spring 23 is disposed in an interior of the connecting and holding portion 20 (refer to Fig. 6). The biasing spring 23 is a compression coil spring, for example, and a front end portion of the biasing spring 23 is attached to the lid member 22. A valve 24 is attached to a rear end portion of the biasing spring 23. A substantially annular restricting portion 25 is provided at a rear end portion of the connecting and holding portion 20 so as to expand radially inwards.

With no force applied to the biasing spring 23 in a compressing direction (in a forward direction), the valve 24 is pressed against the restricting portion 25 from the front.

The connecting projecting portion 21 is made up of a constricted portion 26 which is continuous with the connecting and holding portion 20 and a constant diameter portion 27 which is continuous with a rear end of the constricted portion 26. The constricted portion 26 is shaped so that a diameter decreases as it extends forwards. The constant diameter portion 27 has a substantially cylindrical shape and has a fitting groove 21a which extends in a circumferential direction on an inner circumference thereof (refer to Fig. 6).

An interior space in the connecting projecting portion 21 of the valve case 4 is configured as a second flow path 4a through which a washer fluid flows.

A rear end portion of the connecting projecting portion 21 is provided as a case-side fitting portion 28, and the case-side fitting portion 28 has an irregular or indented shape in which projecting portions 28a, 28a, ... and recess portions 28b, 28b, ... are aligned alternately in a circumferential direction.

The nozzle holding portions 19, 19 project individually sideways (transversely outwards) from the rear end portion of the connecting and holding portion 20, and interior spaces of the nozzle holding portions 19, 19 communicate with an interior space of the connecting and holding portion 20. Interior spaces extending from the rear end portion of the connecting and holding portion 20 to outer end portions of the nozzle holding portions 19, 19 are formed as third flow paths 4b, 4b through which a washer fluid flows.

Jet nozzles 29, 29 are held at the outer end portions of the nozzle holding portions 19, 19, respectively. Jet ports 29a, 29a of the jet nozzles 29, 29 communicate with the third flow paths 4b, 4b, and the jet ports 29a, 29a function as release holes through which air present in the third flow paths 4b, 4b is released to the atmosphere.

As has been described above, formed in an interior of the valve case 4 are the second flow path 4a and the third flow paths 4b, 4b which branch to the left and right from the second flow path 4a so as to communicate with the jet ports 29a, 29a of the jet nozzles 29, 29. A portion where the second flow path 4a is continuous or communicates with the third flow paths 4b, 4b is formed as a branch portion 30.

The valve 24, which is attached to the rear end portion of the biasing spring 23, is positioned in the branch portion 30. Consequently, when the valve 24 is moved so that the tensile coil spring 17 is extended and contracted in the longitudinal direction, the branch portion 30 is closed and opened by the valve 24.

The valve case 4 is connected to the piston 3 by the connecting projecting portion 21 being press fitted on the connecting cylindrical portion 12. With the valve case 4 connected to the piston 3, the fitting projecting portion 12b provided on the connecting cylindrical portion 12 fits in a fitting groove formed in the connecting projecting portion 21.

With the valve case 4 connected to the piston 3, the projecting portions 28a, 28a, ... and the recess portions 28b, 28b, ... of the case-side fitting portion 28 are fitted in and on the recess portions 11b, 11b, ... and the projecting portions 11a, 11a, ... of the piston-side fitting portion 11.

As this occurs, the valve case 4 is connected to the piston 3 in such an orientation that the jet nozzles 29, 29 are positioned upwards. However, no specific orientation with respect to a vertical direction is set on the piston 3. Consequently, the valve case 4 can be connected to the piston 3 only by setting the valve case 4 in the predetermined orientation with respect to the vertical direction without setting the piston 3 in any specific orientation with respect to the vertical direction, thereby making it possible to realize an increase in workability in connecting the valve case 4 to the piston 3.

A positioning construction such as a positioning projecting portion or a positioning hole needs to be provided on neither the piston 3 nor the valve case 4 which enables the piston 3 and the valve case 4 to be contended together while both being oriented properly with respect to the vertical direction. Therefore, overall lengths of the connecting projecting portion 21 and the connecting cylindrical portion 12 can be reduced, thereby making it possible to realize a reduction in size of the washer system 1.

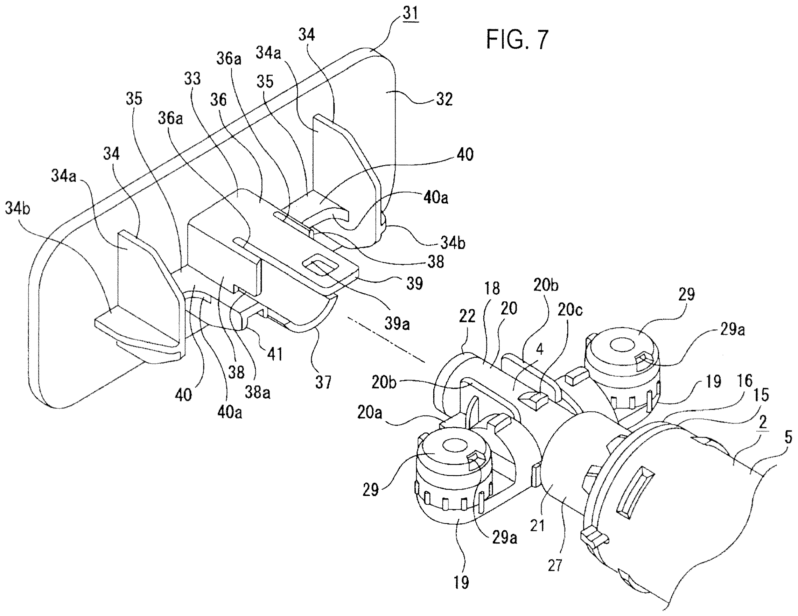

A nozzle cover 31 is connected to the valve case 4 (refer to Fig. 7). The nozzle cover 31 functions as a cover which opens and closes an opening formed in the vehicle body or the bumper in association with the movement of the piston 3. The nozzle cover 31 has a cover portion 32 and a connecting portion 33. The cover portion 32 has a shape which matches the design of the vehicle including a horizontally elongated flat plate-like shape which is oriented in the longitudinal direction. The connecting portion 33 projects to the rear from the cover portion 32 and has a cylindrical shape (refer to Fig. 7).

The nozzle cover 31 is moved to the rear relative to the valve case 4 and is connected to the valve case 4 by the connecting portion 33 being fitted on the connecting and holding portion 20.

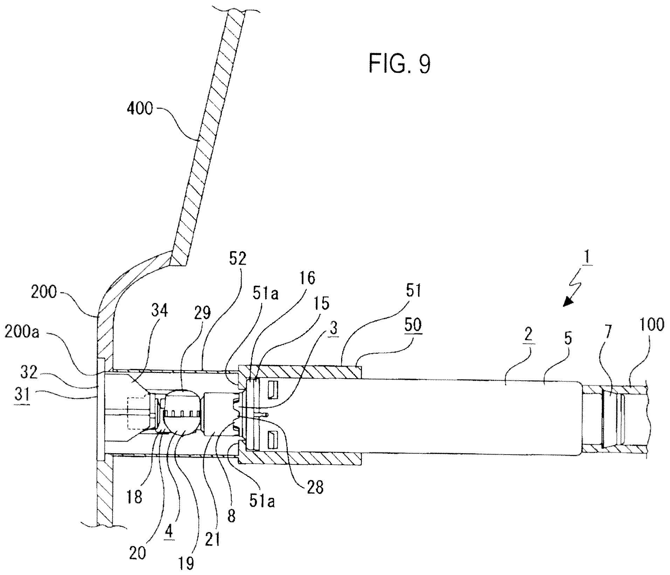

The washer system 1 is mounted on a vehicle body 200, a bumper or a vehicle headlamp with a bracket 50 (refer to Figs. 1 and 9). The bracket 50 includes a cylindrical cylinder holding portion 51, a cylindrical closing portion 52 which projects forwards from the cylinder holding portion 51, and mounted portions 53, 53, ... which project transversely outwards from the cylindrical holding portion 5 1.

A pushing portion 51a is provided at a front end portion of the cylinder holding portion 51 so as to expand radially inwards (refer to Fig. 9).

The closing portion 52 has a horizontally elongated substantially angularly cylindrical shape.

In the bracket 50, the cylinder holding portion 51 is mounted and fits on the front end portion of the cylinder 2 in such a state that the closing portion 52 covers the valve case 4, and the mounted portions 53, 53, ... are attached to the vehicle body 200, the bumper or the vehicle headlamp with screws. Consequently, the washer system 1 is mounted on the vehicle body 200, the bumper or the vehicle headlamp with the bracket 50.

With the bracket 50 mounted on the vehicle body 200, the bumper or the vehicle headlamp, a front end face of the closing portion 52 is brought into abutment with a rear opening edge of an opening 200a which is formed in the vehicle body 200, the bumper or the vehicle headlamp from the rear. Consequently, the intrusion of dust or the like into the valve case 4, for example, is prevented by the closing portion 52.

With the bracket 50 mounted on the vehicle body 200, the bumper or the vehicle headlamp, the dust cover 16 is pushed from the outside by the pushing portion 51a of the cylinder holding portion 51. Consequently, the dust cover 16 is prevented from being dislocated from the cap 15 and the cylinder 2, whereby a good function of the dust cover 16 is ensured.

In the washer system 1 that is configured as has been described above, in an accommodated state in which the washer system 1 is accommodated in an interior of the vehicle, the piston 3 is biased to the rear by virtue of the biasing force of the tensile coil spring 17, whereby an outer circumferential portion of the cover portion 32 of the nozzle cover 31 is closely secured to the front opening edge of the opening 200a which is formed in the vehicle body 200, the bumper or the vehicle headlamp to thereby close the opening 200a (refer to Fig. 9).

As this occurs, the valve 24 is pressed against the restricting portion 25 by the biasing spring 23 which is disposed in the valve case 4, whereby the second flow path 4a is separated from the third flow paths 4b, 4b by the valve 24 (refer to Fig. 6).

In the accommodated state described above, when a washer fluid is supplied from the supply tank into the piston 3 via the connecting tube 100, the washer fluid flows into the second flow path 4a in the valve case 4 by passing through the first flow path 3a in the piston 3. The valve 24 is left closed then, and therefore, the washer fluid does not flow into the third flow paths 4b, 4b.

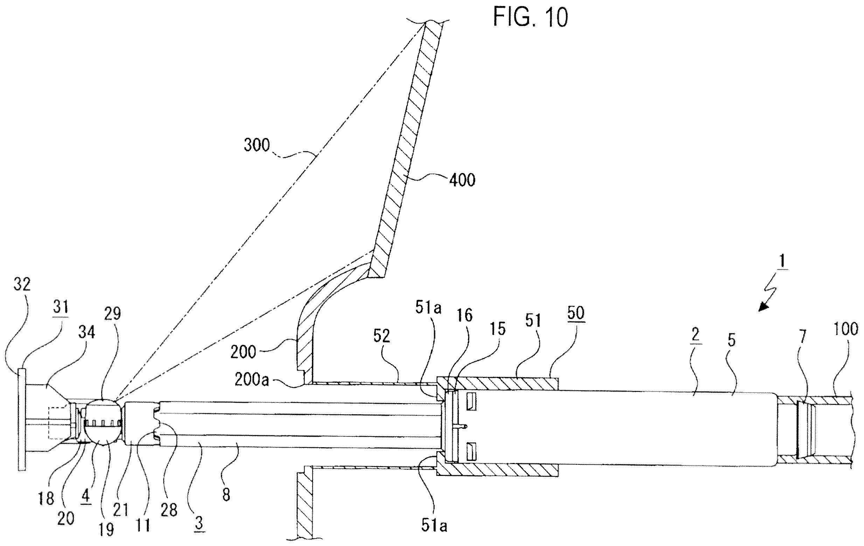

When the washer fluid flows into the second flow path 4a, an internal pressure in the piston 3 is increased by the washer fluid so supplied, whereby the tensile coil spring 17 is extended, and the piston 3 comes to project to the front from the cylinder 2. Then, in association with the forward movement of the piston 3, the valve case 4 and the nozzle cover 31 are caused to move to the front together (refer to Fig. 10). When the valve case 4 is caused to move to the front, the opening 200a in the vehicle body 200, the bumper or the vehicle headlamp is opened, and the valve case 4 projects to the front from the opening 200a.

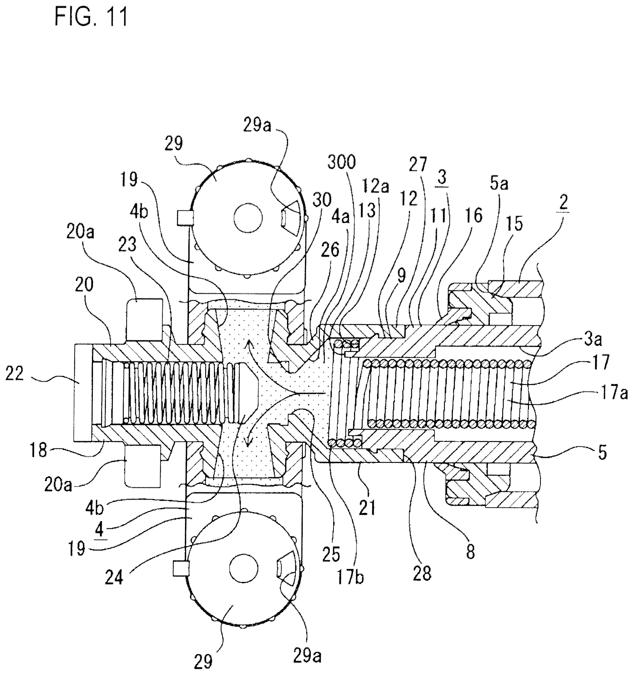

When the flange portion 10 of the piston 3 is brought into contact with the cap 15 attached to the front portion of the cylinder 2, the forward movement of the piston 3 and the like is stopped. When the forward movement of the piston 3 and the like is stopped, the internal pressure in the piston 3 is increased further by a further supply of washer fluid, and then, the valve 24 is opened, whereby the biasing spring 23 is compressed, and the washer fluid flows the second flow path 4a into the third flow paths 4b, 4b (refer to Fig. 11). The washer fluid 300 which has flowed from the second flow path 4a into the third flow paths 4b, 4b is jetted form the jet ports 29a, 29a of the jet nozzles 29, 29 towards a cover 400 of the vehicle headlamp, whereby the cover 400 is washed with the washer fluid 300 so jetted (refer to Fig. 10).

When the supply of washer fluid from the supply tank is stopped, the internal pressure in the piston 3 is decreased, the biasing spring 23 is extended, and the valve 24 is closed. Then, the jetting of the washer fluid 300 from the jet nozzles 29, 29 is stopped.

When the internal pressure is decreased further, the piston 3, the valve case 4 and the nozzle cover 31 are caused to move to the rear by virtue of the biasing force of the tensile coil spring 17, whereby the accommodated state is brought about again (refer to Fig. 9).

Thus, as has been described heretofore, in the washer system 1, the valve 24 is disposed in the branch portion 30 which is formed in the valve case 4. The valve 24 is opened or closed depending upon the fluid pressure of the washer fluid 300, whereby the washer fluid 300 is supplied from the second flow path 4a into the third flow paths 4b, 4b or such a supply of the washer fluid 300 is stopped.

Consequently, the washer fluid 300 is divided into the third flow paths 4b, 4b at the same time as the valve 24 is opened. Therefore, the fluid pressure of the washer fluid 300 is made difficult to change in the valve case 4, whereby the valve 24 is opened and closed in a stable fashion, thereby making it possible to ensure a smooth flow of the washer fluid 300. Thus, a stable jetting operation of the washer fluid 300 from the jet nozzles 29, 29 can be brought about.

Additionally, the valve 24 is caused to move in the flowing direction of the washer fluid 300 in the second flow path 4a so as to be opened or closed as the tensile coil spring 17 is extended or contracted. Therefore, the opening and closing mechanism of the valve 24 becomes simple, thereby making it possible to simplify the construction of the washer system 1, as well as reducing the size of the washer system 1.

Further, the jet ports 29a, 29a in the jet nozzles 29, 29 function as the release holes through which air present in the third flow paths 4b, 4b is released to the atmosphere. Therefore, no separate exclusive release holes which communicate with the atmosphere have to be formed in the valve case 4, thereby making it possible to simplify the construction of the washer system 1.

Hereinafter, the nozzle cover of the exemplary embodiment will be described by reference to the accompanying drawings.

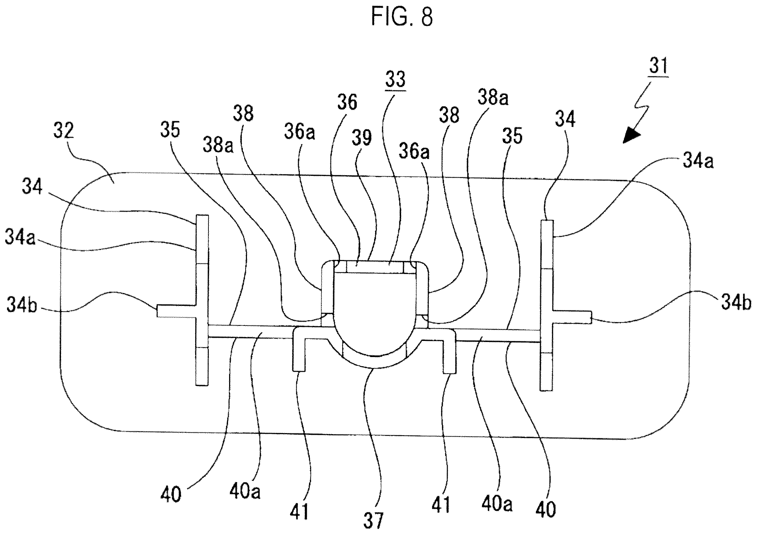

The nozzle cover 31 includes the cover portion 32, the connecting portion 33, reinforcement portions 34, 34 and projecting piece portions 35, 35, which are all integrated into the nozzle cover 31 (refer to Figs. 7 and 8).

The cover portion 32 has the shape which matches the design of the vehicle including the horizontally elongated flat plate-like shape which is oriented in the longitudinal direction.

The connecting portion 33 is disposed at a transversely central portion on an inner surface (a rear surface) side of the cover portion 32. The connecting portion 33 includes an upper surface portion 36, a lower surface portion 37 and lateral surface portions 38, 38.

An engagement piece 39 is provided on the upper surface portion 36 so as to project to the rear, and a vertical through engagement hole 39a is formed in the engagement piece 39 in a position lying close to a rear end thereof. Slits which are opened to the front are formed substantially in a longitudinally central portion of the upper surface portion 36 so as to be situated on left- and right-hand sides of the engagement piece 39. These slits are formed as guided portions 36a, 36a.

The lower surface portion 37 is formed into a moderate arc shape which is convex downwardly.

Slits which are opened to the front are formed in lower edges of the lateral surface portions 38, 38, respectively, and these slits are formed as restricted portions 38a, 38a.

The reinforcement portions 34, 34 are positioned so as to be spaced transversely apart from each other with respect to the connecting portion 33. The reinforcement portions 34, 34 are made up individually of first piece portions 34a, 34a which are each oriented in a transverse direction and second piece portions 34b, 34b which project transversely outwards from outer surfaces of the first piece portions 34a, 34a.

The projecting piece portions 35, 35 are individually positioned between the connecting portion 33 and the reinforcement portions 34, 34 and are connected to the connecting portion 33 and the reinforcement portions 34, 34 at transverse ends thereof, respectively. The projecting piece portions 35, 35 are made up individually of base surface portions 40, 40 which are oriented in a vertical direction and projecting portions 41, 41 which project downwards from the base surface portions 40, 40, respectively. Cutout portions 40a, 40a which are opened to the front are formed in the base surface portions 40, 40, respectively.

The nozzle cover 31 is caused to move to the rear relative to the valve case 4 and is connected to the valve case 4 by the connecting portion 33 being fitted on the connecting and holding portion 20.

The connection of the nozzle cover 31 to the valve case 4 is brought about by the nozzle cover 31 being caused to move to the rear. This causes the engagement piece 39 to slide over an engagement projecting portion 20c and is then elastically deformed so as to be displaced upwards. Then, the engagement projecting portion 20c fits in the engagement hole 39a in an engaged fashion, whereupon the engagement piece 39 is restored to its original state elastically, whereby the nozzle cover 31 is connected to the valve case 4. As this occurs, guide portions 20b, 20b on the valve case 4 are inserted into the guided portions 36a, 36a in the connecting portion 33, respectively, whereby the nozzle cover 31 is guided onto the valve cover 4.

With the nozzle cover 31 connected to the valve case 4, the connecting and holding portion 20 of the valve cover 4 is inserted into the connecting portion 33 of the nozzle cover 31. Then, the jet nozzles 29, 29 are inserted, respectively, into the cutout portions 40a, 40a which lie individually between the projecting portions 41, 41 and the first piece portions 34a, 34a of the reinforcement portions 34, 34 and are then positioned to lie at the rear of the cutout portions 40a, 40a.

Thus, as has been described above, the guided portions 36a, 36a are formed in the nozzle cover 31, and the guide portions 20b, 20b are provided on the valve case 4, whereby the nozzle cover 31 can be connected to a predetermined position with respect to the valve case 4 in an ensured fashion.

In the embodiment described above, the slits are described as being formed as the guided portions 36a, 36a and the projecting pieces are described as being formed as the guide portions 20b, 20b which are inserted into the slits. However, on the contrary, a configuration may be adopted in which projecting pieces are provided as guided portions 36a, 36a and slits are formed as guide portions 20b, 20b.

With the nozzle cover 31 connected to the valve case 4, rotation restricting portions 20a, 20a on the valve case 4 are inserted, respectively, into the restricted portions 38a, 38a in the nozzle cover 31, whereby the rotation of the nozzle cover 31 relative to the valve case 4, that is, the rotation of the piston 3 about an axis thereof is restricted.

In this way, by forming the restricted portions 38a, 38a in the nozzle cover 31 and providing the rotation restricting portions 20a, 20a on the valve cover 4, the rotation of the nozzle cover 31 relative to the valve case 4 is restricted, whereby the nozzle cover 31 can be held in the predetermined position with respect to the valve cover 4.

In the embodiment above, the slits are described as being formed as the restricted portions 38a, 38a, and the projecting pieces are described as being provided as the rotation restricting portions 20a, 20a which are inserted into the slits. However, on the contrary, a configuration may be adopted in which projecting pieces are provided as restricted portions 38a, 38a, and slits are formed as rotation restricting portions 20a, 20a.

As has been described heretofore, in the washer system 1, the nozzle cover 31 is connected to the valve case 4 by providing the engagement piece 39 having the engagement hole 39a on the nozzle cover 31 and providing the engagement projecting portion 20c on the valve case 4 so that the engagement piece 39 is deformed elastically. Consequently, with the nozzle cover 31 connected to the valve case 4, the engagement piece 39 is elastically deformed so as to release the engagement of the engagement projecting portion 20c with the engagement hole 39a, and the nozzle cover 31 is caused to the front relative to the valve case 4, whereby the nozzle cover 31 can be removed from the valve case 4.

In the washer system 1 that is configured as has been described heretofore, the nozzle cover 31 can be mounted on and dismounted from the valve case 4 by elastically deforming the engagement piece 39, and hence, the attaching and detaching work of the nozzle cover 31 to and from the valve case 4 can be facilitated, thereby making it possible to realize an increase in workability. In particular, the replacement of nozzle covers 31 can easily be performed, thereby making it possible to realize an increase in serviceability for maintenance.

In addition, in the washer system 1, the nozzle cover 31 is connected to the valve case 4 having the jet nozzles 29, 29, and therefore, nothing is interposed between the nozzle cover 31 and the valve case 4.

Consequently, the overall length of the washer system 1 can be reduced accordingly, whereby the size of the washer system 1 can be reduced. In addition, the number of parts involved can be reduced, whereby a reduction in production costs can be realized.

The configurations and constructions of the constituent portions and members which are described in the best mode for carrying out the invention are only one example in embodying the invention, and hence, the technical scope of the invention should not be construed as being limited by them.

## Claims

1. A vehicle lamp washer system (1) comprising:
a cylinder (2) into which a washer fluid is supplied from a supply tank;
a piston (3) supported in the cylinder so as to move in an axial direction with a part of the piston (3) projecting from the cylinder (2), the piston (3) having a first flow path through which the washer fluid flows;
a valve case (4) having a plurality of jet nozzles (29) from which the washer fluid is jetted and being connected to one end portion in the axial direction of the part of the piston projecting from the cylinder (2), the valve case (4) having a second flow path connected to the first flow path, a plurality of third flow paths branching off the second flow path and communicating with the plurality of jet nozzles (29), respectively, and a branch portion at which the second flow path and the plurality of third flow paths are connected together; and
a valve (24) disposed in the branch portion and adapted to move in accordance with a fluid pressure of the washer fluid to open or close the branch portion so as to start or stop a supply of the washer fluid from the second flow path to the plurality of third flow paths, **characterized in that**
the piston (3) has a piston-side fitting portion (11) at the one end portion in the axial direction, the piston-side fitting portion having an indented shape in which projecting portions (11a) and recess portions (11b) are aligned alternately in a circumferential direction, wherein
the valve case (4) has a case-side fitting portion for fitment with the piston-side fitting portion, the case-side fitting portion having an indented shape in which projecting portions and recess portions are aligned alternately in a circumferential direction, wherein
the projecting portions (11a) and the recess portions (11b) of the case-side fitting portion are fitted in and on the recess portions and the projecting portions of the piston-side fitting portion so that the piston and the valve case are connected together, wherein
the piston (3) has a cylindrical portion (8) which has a regular hexagonal cross section and the front end portion thereof is provided as the piston-side fitting portion (11), and wherein
the piston-side fitting portion (11) is formed so that the projecting portions (11a, 11a) are disposed one for each side of the regular hexagon in an alternating fashion.

2. The vehicle lamp washer system as set forth in Claim 1, further comprising:
a restricting portion (25) disposed in the valve case (4) against which the valve (24) is pressed to thereby restrict the movement of the valve; and
a biasing spring (23) disposed in the valve case (4) and adapted to bias the valve in a direction in which the valve is pressed against the restricting portion, wherein
the valve (24) is adapted to move in a direction in which the washer fluid flows in the second flow path so as to open or close the branch portion.

3. The vehicle lamp washer system as set forth in Claim 1 or 2, wherein jet ports (29a) of the jet nozzles (29) function as release holes from which air present in the third flow paths is released to the atmosphere.

4. The vehicle lamp washer system as set forth in Claim 1, 2 or 3, further comprising:
a tensile coil spring (17) adapted to bias the piston in a direction in which the piston (3) is accommodated in the cylinder (2), the tensile coil spring (17) having an annular engagement portion at one end portion, the engagement portion larger in diameter than the other portion, wherein
the piston (3) has a support and engagement portion (9) at one end portion in the axial direction, and wherein
the annular engagement portion (17b) is fitted and supported on the support and engagement portion (9) while the other portion than the annular engagement portion (17b) of the tensile coil spring (17) is inserted in the piston (3), and the other end portion of the tensile coil spring (17) is supported in the cylinder (2).

## Patentansprüche

1. Fahrzeuglampen-Waschsystem (1), umfassend:
einen Zylinder (2), dem ein Waschfluid aus einem Zufuhrtank zugeführt wird,
einen Kolben (3), der in dem Zylinder gestützt wird, um sich in einer axialen Richtung zu bewegen, wobei ein Teil des Kolbens (3) von dem Zylinder (2) vorsteht, wobei der Kolben (3) einen ersten Fließweg aufweist, durch den das Waschfluid fließt,
ein Ventilgehäuse (4), das mehrere Strahldüsen (29) aufweist, aus denen das Waschfluid ausgestoßen wird, und das mit einem Endabschnitt in der axialen Richtung des Teils des Kolbens, der von dem Zylinder (2) vorsteht, verbunden ist, wobei das Ventilgehäuse (4) einen zweiten Fließweg aufweist, der mit dem ersten Fließweg verbunden ist, wobei mehrere dritte Fließwege von dem zweiten Fließweg abzweigen und jeweils mit den mehreren Strahldüsen (29) und einem Abzweigabschnitt, an dem der zweite Fließweg und die mehreren dritten Fließwege miteinander verbunden sind, kommunizieren, und
ein Ventil (24), das in dem Abzweigabschnitt angeordnet und ausgelegt ist, um sich gemäß einem Fluiddruck des Waschfluids zu bewegen, um den Abzweigabschnitt zu öffnen oder zu schließen, um eine Zufuhr des Waschfluids von dem zweiten Fließweg zu den mehreren dritten Fließwegen zu beginnen oder anzuhalten, **dadurch gekennzeichnet, dass**
der Kolben (3) einen kolbenseitigen Passabschnitt (11) an dem einen Endabschnitt in der axialen Richtung aufweist, wobei der kolbenseitige Passabschnitt eine eingerückte Form aufweist, in der Vorsprungsabschnitte (11a) und Aussparungsabschnitte (11b) abwechselnd in einer Umfangsrichtung ausgerichtet sind, wobei
das Ventilgehäuse (4) einen gehäuseseitigen Passabschnitt zur Passung mit dem kolbenseitigen Passabschnitt aufweist, wobei der gehäuseseitige Passabschnitt eine eingerückte Form aufweist, in der Vorsprungsabschnitte und Aussparungsabschnitte abwechselnd in einer Umfangsrichtung ausgerichtet sind, wobei
die Vorsprungsabschnitte (11a) und die Aussparungsabschnitte (11b) des gehäuseseitigen Passabschnittes in und an den Aussparungsabschnitten und den Vorsprungsabschnitten des kolbenseitigen Passabschnittes angebracht sind, sodass der Kolben und das Ventilgehäuse miteinander verbunden sind, wobei
der Kolben (3) einen zylindrischen Abschnitt (8) aufweist, der einen regelmäßigen hexagonalen Querschnitt aufweist und wobei der vordere Endabschnitt davon als der kolbenseitige Passabschnitt (11) bereitgestellt ist, und wobei
der kolbenseitige Passabschnitt (11) derart gebildet ist, dass die Vorsprungsabschnitte (11a, 11a) auf abwechselnde Weise, einer für jede Seite des regelmäßigen Hexagons, angeordnet sind.

2. Fahrzeuglampen-Waschsystem nach Anspruch 1, ferner umfassend:
einen einschränkenden Abschnitt (25), der in dem Ventilgehäuse (4) angeordnet ist, gegen den das Ventil (24) gedrückt wird, um dadurch die Bewegung des Ventils einzuschränken, und
eine Vorspannfeder (23), die in dem Ventilgehäuse (4) angeordnet und ausgelegt ist, um das Ventil in eine Richtung vorzuspannen, in der das Ventil gegen den einschränkenden Abschnitt gedrückt wird, wobei
das Ventil (24) ausgelegt ist, um sich in eine Richtung zu bewegen, in der das Waschfluid in dem zweiten Fließweg fließt, um den Abzweigabschnitt zu öffnen oder zu schließen.

3. Fahrzeuglampen-Waschsystem nach Anspruch 1 oder 2, wobei
Strahlöffnungen (29a) der Strahldüsen (29) als Abgabelöcher dienen, aus denen in den dritten Fließwegen vorhandene Luft an die Atmosphäre abgegeben wird.

4. Fahrzeuglampen-Waschsystem nach Anspruch 1, 2 oder 3, ferner umfassend:
eine Zugspulenfeder (17), die ausgelegt ist, um den Kolben in eine Richtung vorzuspannen, in der der Kolben (3) in dem Zylinder (2) aufgenommen ist, wobei die Zugspulenfeder (17) einen ringförmigen Eingriffsabschnitt an einem Endabschnitt aufweist, wobei der Eingriffsabschnitt im Durchmesser größer als der andere Abschnitt ist, wobei
der Kolben (3) einen Stütz- und Eingriffsabschnitt (9) an einem Endabschnitt in der axialen Richtung aufweist, und wobei
der ringförmige Eingriffsabschnitt (17b) an dem Stütz- und Eingriffsabschnitt (9) angebracht ist und gestützt wird, während der andere Abschnitt als der ringförmige Eingriffsabschnitt (17b) der Zugspulenfeder (17) in den Kolben (3) eingefügt ist und der andere Endabschnitt der Zugspulenfeder (17) in dem Zylinder (2) gestützt wird.

## Revendications

1. Système de lavage de lampe de véhicule (1) comprenant :
un cylindre (2) dans lequel un liquide de lavage est amené depuis un réservoir d'alimentation ;
un piston (3) supporté dans le cylindre afin de se déplacer dans une direction axiale avec une partie du piston (3) faisant saillie depuis le cylindre (2), le piston (3) ayant un premier passage d'écoulement à travers lequel le liquide de lavage s'écoule ;
un boîtier de valve (4) ayant une pluralité de buses de jet (29) à partir desquelles le fluide de lavage est expulsé et étant raccordé à une partie d'extrémité dans la direction axiale de la partie du piston faisant saillie du cylindre (2), le boîtier de valve (4) ayant un deuxième passage d'écoulement raccordé du premier passage d'écoulement, une pluralité de troisièmes passages d'écoulement se ramifiant depuis le deuxieme passage d'écoulement et communiquant avec la pluralité de buses de jet (29), respectivement, et une partie de branche à laquelle le deuxième passage d'écoulement et la pluralité de troisièmes passages d'écoulement sont raccordés ensemble ; et
une valve (24) disposée dans la partie de branche et adaptée pour se déplacer selon une pression de fluide du liquide de lavage pour ouvrir ou fermer la partie de branche afin de démarrer ou d'arrêter une alimentation du liquide de lavage du deuxième passage d'écoulement à la pluralité de troisièmes passages d'écoulement, **caractérisé en ce que**
le piston (3) a une partie de montage du côté du piston (11) au niveau deladite partie d'extrémité dans la direction axiale, la partie de montage du côté du piston ayant une forme indentée dans laquelle des parties en saillie (11a) et des parties d'évidement (11b) sont alignées de manière alternée dans une direction circonférentielle, dans lequel
le boîtier de valve (4) a une partie de montage du côté du boîtier pour s'adapter avec la partie de montage du côté du piston, la partie du côté du boîtier ayant une forme indentée dans laquelle des parties en saillie et des parties d'évidement sont alignées de manière alternée dans une direction circonférentielle, dans lequel
les parties en saillie (11a) et les parties d'évidement (11b) de la partie de montage du côté du boîtier sont montées dans et sur les parties d'évidement et les parties en saillie de la partie de montage du côté du piston de sorte que le piston et le boîtier de valve sont raccordés ensemble, dans lequel
le piston (3) a une partie cylindrique (8) qui a une section transversale hexagonale régulière et la partie d'extrémité avant de celle-ci est prévue en tant que partie de montage du côté du piston (11), et dans lequel
la partie de montage du côté du piston (11) est formée de sorte que les parties en saillie (11a, 11a) sont disposées une pour chaque côté de l'hexagone régulier d'une manière alternée.

2. Système de lavage de lampe de véhicule selon la revendication 1, comprenant en outre :
une partie de restriction (25) disposée dans le boîtier de valve (4) contre laquelle la valve (24) est comprimée afin de limiter ainsi le mouvement de la valve ; et
un ressort de sollicitation (23) disposé dans le boîtier de valve (4) et adapté pour solliciter la valve dans une direction dans laquelle la valve est comprimée contre la partie de restriction, dans lequel
la valve (24) est adaptée pour se déplacer dans une direction dans laquelle le fluide de lavage s'écoule dans la deuxième trajectoire d'écoulement afin d'ouvrir ou de fermer la partie de branche.

3. Système de lavage de lampe de véhicule selon la revendication 1 ou 2, dans lequel
des orifices de jet (29a) des buses de jet (29) servent de trous de libération à partir desquels l'air présent dans les troisièmes trajectoires d'écoulement est libéré à l'atmosphère.

4. Système de lavage de lampe de véhicule selon la revendication 1, 2 ou 3, comprenant en outre :
un ressort hélicoïdal de tension (17) adapté pour solliciter le piston dans une direction dans laquelle le piston (3) est logé dans le cylindre (2), le ressort hélicoïdal de tension (17) ayant une partie de mise en prise annulaire au niveau d'une partie d'extrémité, la partie de mise en prise étant d'un plus grand diamètre que l'autre partie, dans lequel
le piston (3) a une partie de support et de mise en prise (9) au niveau d'une partie d'extrémité dans la direction axiale, et dans lequel
la partie de mise en prise annulaire (17b) est montée et supportée sur la partie de support et de mise en prise (9) alors que l'autre partie par rapport à la partie de mise en prise annulaire (17b) du ressort hélicoïdal de tension (17) est insérée dans le piston (3), et l'autre partie d'extrémité du ressort hélicoïdal de tension (17) est supportée dans le cylindre (2).
